# FASCICULE DE BREVET EUROPEEN

(11) **EP 1 621 744 B1**
(45) Date de publication et mention de la délivrance du brevet: **09.04.2008**
(21) Numéro de dépôt: 05291561.8
(22) Date de dépôt: 20.07.2005
(51) Int. Cl.: F02C 7/057

(54) **Ensemble de cône d'entrée d'une turbomachine et d'un arbre portant des aubes de soufflante**
Zusammenbau einer Nasenhaube einer Turbomaschine und einer Fanschaufel-Welle.
A turbine engine assembly of a nose cone and a shaft with fan blades

(30) Priorité: 28.07.2004 FR 0408338
(43) Date de publication de la demande: 01.02.2006
(73) Titulaire: SNECMA, 75015 Paris (FR)
(72) Inventeur: Lebret, Yann, 77950 Maincy (FR); Ramstein, Edouard, 77000 Vaux le Penil (FR)
(74) Mandataire: Ramey, Daniel

(56) Documents cités:
- GB-A- 1 427 339
- US-A- 3 176 462
- US-A- 3 495 605
- US-A- 5 148 673

## Description

La présente invention concerne un ensemble de cône d'entrée d'une turbomachine, telle en particulier qu'un turboréacteur, et d'un arbre portant des aubes de soufflante.

Un turboréacteur comprend à son extrémité amont une entrée d'air alimentant une soufflante et un compresseur dont les aubes sont portées par des disques solidaires d'un arbre qui s'étend sur une majeure partie du turboréacteur et qui est entraîné en rotation par une turbine du turboréacteur.

Un cône d'entrée est monté à l'extrémité amont de cet arbre pour dévier une partie du flux d'air qui pénètre à l'intérieur du turboréacteur vers les aubes de la soufflante, ce flux étant ensuite séparé en un flux primaire qui passe dans un orifice d'admission du compresseur, et en un flux secondaire qui s'écoule autour du compresseur et qui est ensuite mélangé au flux primaire et/ou alimente des circuits de refroidissement de composants du turboréacteur.

Dans la technique actuelle, le cône d'entrée est monté fixement en bout d'arbre et sa forme et ses dimensions sont déterminées afin d'optimiser les incidences de l'air sur les pieds des aubes de soufflante pour une phase de vol donnée.

La forme et les dimensions du cône d'entrée sont également déterminées pour constituer une protection contre l'ingestion de glace et de particules ou objets solides.

Le choix de la forme et des dimensions du cône d'entrée résultent donc d'un compromis entre ces deux contraintes relativement contradictoires et ne répond donc pas de façon réellement satisfaisante à ces deux contraintes.

L'invention a notamment pour but d'apporter une solution simple, économique et efficace à ce problème.

Le document US-A-3 176 462 décrit une turbomachine comprenant une entrée d'air alimentant un compresseur dont l'arbre est relié à un cône qui est axialement déplaçable pour ouvrir et fermer l'entrée d'air. Cette turbomachine ne comprend pas de soufflante.L'invention a pour objet un cône d'entrée d'une turbomachine qui permet d'optimiser l'incidence de l'air sur les pieds des aubes de soufflante pour différentes phases de vol tout en assurant de façon efficace une protection contre l'ingestion de glace et de particules ou objets solides.

Elle propose à cet effet un ensemble de cône d'entrée d'une turbomachine, telle en particulier qu'un turboréacteur, et d'un arbre portant des aubes de soufflante le cône étant monté en bout de l'arbre et permettant de régler l'incidence d'un flux d'air entrant sur les pieds des aubes de soufflante, caractérisé en ce qu'il est monté sur l'arbre précité par des moyens commandés de déplacement axial permettant de modifier sa position axiale par rapport aux aubes de soufflante.

Le déplacement axial du cône d'entrée au bout de l'arbre précité permet de modifier et d'optimiser l'incidence de l'air sur les pieds des aubes de soufflante pour différentes phases de vol et pour assurer une meilleure protection contre l'ingestion de glace et de matières solides.

En phase de décollage, le cône d'entrée est par exemple déplacé axialement dans une position avancée par rapport aux aubes de soufflante, pour dévier au maximum la glace et les matières solides vers l'extérieur.

En phase de vol, le cône d'entrée peut être déplacé axialement depuis la position avancée précitée vers une ou plusieurs positions reculées, pour adapter l'incidence de l'air sur les pieds des aubes de la soufflante et l'optimiser en fonction des conditions de vol.

Dans un mode préféré de réalisation de l'invention, le cône est relié à l'arbre précité par un vérin hydraulique dont le cylindre est fixé à l'extrémité de l'arbre et dont la tige de piston porte le cône.

Les moyens commandés de déplacement axial du cône sont portés par l'arbre et sont entraînés en rotation avec le cône d'entrée et les aubes de soufflante. Ils sont raccordés à des moyens tournants d'alimentation en fluide hydraulique qui comprennent une source de fluide hydraulique sous pression et des moyens de régulation de pression.

La position axiale du cône d'entrée est déterminée par régulation de la pression dans le vérin hydraulique. Ces moyens commandés de déplacement axial ont l'avantage d'être simples à réaliser et à mettre en oeuvre.

L'invention propose également une turbomachine, telle qu'un turboréacteur, caractérisée en ce qu'elle comprend un cône d'entrée du type tel que décrit ci-dessus.

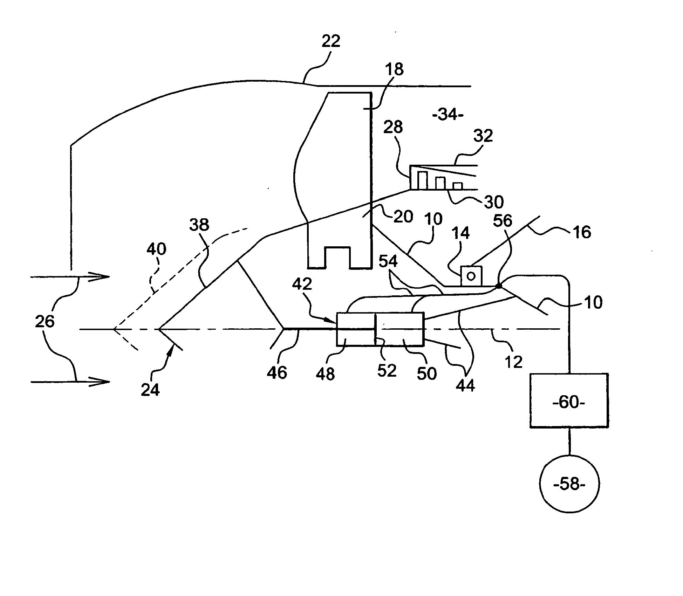

D'autres avantages et caractéristiques de l'invention apparaîtront à la lecture de la description suivante faite à titre d'exemple non limitatif et en référence au dessin annexé qui est une demi-vue très schématique en coupe axiale de la partie avant d'un turboréacteur équipé d'un cône d'entrée selon l'invention.

Le turboréacteur représenté au dessin comprend un arbre 10 qui est entraîné en rotation autour de son axe 12 par une turbine montée en sortie d'une chambre de combustion, cet arbre 10 étant centré et guidé en rotation par des paliers 14 montés sur des parties 16 du stator du turboréacteur.

L'arbre 10 porte à son extrémité amont une pluralité d'aubes de soufflante 18 dont les extrémités 20 radialement internes sont fixées de façon classique sur la périphérie d'une partie tronconique de l'arbre 10.

Les aubes de soufflante 18 sont entourées extérieurement par un capot de nacelle 22 sensiblement cylindrique qui permet de canaliser un flux d'air entrant dans le turboréacteur.

Un cône d'entrée 24 est monté à l'extrémité amont de l'arbre 10 et est raccordé à la partie tronconique de l'arbre portant les aubes de soufflante 18, pour dévier vers ces aubes 18 la partie centrale 26 du flux d'air entrant.

Immédiatement en aval des aubes de soufflante 18, se trouve un orifice annulaire 28 d'admission d'air dans un compresseur dont les aubes sont portées par une partie 30 de l'arbre 10 et logées dans un carter cylindrique externe 32 qui délimite un espace annulaire 34 avec la surface interne du capot de nacelle 22.

L'air qui pénètre dans l'orifice annulaire 28 du compresseur forme un flux primaire qui est comprimé par le compresseur du turboréacteur, puis mélangé à du carburant et brûlé dans une chambre de combustion, en sortie de laquelle il fournit de l'énergie aux aubes mobiles de la turbine d'entraînement en rotation de l'arbre 10. L'air qui passe dans l'espace annulaire 34 forme un flux secondaire destiné à être mélangé au flux primaire pour refroidir différents composants du turboréacteur et pouvant également servir à augmenter la poussée du turboréacteur.

Dans la technique actuelle, les cônes d'entrée sont fixes en bout d'arbre et leurs formes et leurs dimensions sont déterminées pour optimiser l'incidence de l'air sur les pieds des aubes de soufflante 18 pour une phase de vol donnée, les cônes d'entrée devant également permettre la déviation des particules et matière solides vers l'extérieur.

Selon l'invention, le cône d'entrée 24 est monté axialement déplaçable sur l'axe 12 de l'arbre 10 par des moyens commandés portés par l'arbre 10 et destinés à modifier la position axiale du cône 24 par rapport aux aubes de soufflante 18.

Le cône d'entrée 24 est ainsi déplaçable entre une position 38 reculée, représentée en traits pleins, qui peut être la position fixe de la technique antérieure ou une autre position plus reculée, et une position 40 avancée, représentée en traits pointillés, qui augmente la déviation de l'air et des matières et particules solides vers l'extérieur par rapport à l'axe de rotation 10. Le cône d'entrée 24 peut également être positionné dans des positions prédéterminées, intermédiaires entre la position avancée 40 et la position la plus reculée 38.

Dans l'exemple de réalisation représenté, les moyens commandés de déplacement axial du cône d'entrée 24 comprennent un vérin hydraulique 42 dont le cylindre est fixé à l'arbre 10 par des moyens 44 appropriés et s'étend axialement, et dont la tige de piston 46 s'étend axialement vers l'amont et est reliée au cône d'entrée 24 pour son déplacement axial.

Le vérin hydraulique 42 comprend une chambre amont 48 et une chambre aval 50 de réception de fluide hydraulique, séparées de façon étanche par le piston 52 du vérin et alimentées en fluide hydraulique par des conduits 54 reliés à des raccords tournants 56 montés sur l'arbre 10, et alimentés par un circuit 58 de fluide hydraulique sous pression comprenant des moyens 60 de régulation de pression, les moyens 60 de régulation de pression et le circuit 58 étant portés par le stator du turboréacteur.

Le dispositif selon l'invention fonctionne de la façon suivante :
pour le décollage, la chambre 50 du vérin 42 est alimentée en fluide hydraulique provenant de la source 58 de sorte que le piston 52 est déplacé vers l'amont et entraîne avec lui le cône d'entrée 24 fixé sur la tige de piston 46, jusqu'à la position avancée 40 dans laquelle les matières et particules solides présentes dans l'air sont déviées au maximum vers l'extérieur par rapport à l'axe 12 de rotation. En phase de vol, les pressions dans les chambres 48, 50 du vérin 42 sont réglées pour que le piston 52 entraîne le cône d'entrée jusqu'à la position reculée 38 ou une position intermédiaire entre la position avancée 40 précitée et la position reculée 38 pour optimiser l'incidence de l'air sur les pieds des aubes de soufflante 18 pour cette phase de vol.

## Revendications

1. Ensemble de cône d'entrée d'une turbomachine, telle en particulier qu'un turboréacteur, et d'un arbre (10) portant des aubes de soufflante (18) le cône étant monté en haut de l'arbre et permettant de régler l'incidence d'un flux d'air entrant sur les pieds des aubes de soufflante (18), **caractérisé en ce que** le cône est monté sur l'arbre (10) précité par des moyens commandés (42) de déplacement axial permettant de modifier sa position axiale par rapport aux aubes de soufflante (18).

2. Ensemble selon la revendication 1, **caractérisé en ce que** le cône est déplaçable axialement entre une position avancée (40) de protection contre l'ingestion de matières et particules solides, et une position reculée (38) d'optimisation de l'incidence de l'air sur les pieds des aubes (18) de la soufflante.

3. Ensemble selon la revendication 1 ou 2, **caractérisé en ce que** le cône est relié à l'arbre (10) précité par un vérin hydraulique (42) dont le cylindre est fixé à l'extrémité de l'arbre (10) et dont la tige de piston (46) porte le cône (24).

4. Ensemble selon la revendication 3, **caractérisé en ce que** le vérin hydraulique (42) est raccordé à des moyens tournants (56) d'alimentation en fluide hydraulique.

5. Ensemble selon la revendication 4, **caractérisé en ce que** les moyens d'alimentation du vérin (42) comprennent une source (58) de fluide hydraulique sous pression et des moyens (60) de régulation de pression.

6. Turbomachine, telle qu'un turboréacteur, **caractérisée en ce qu'**elle comprend un ensemble selon l'une des revendications précédentes.

## Claims

1. An assembly of a nose cone for a turbomachine, such as a turbojet in particular, and a shaft (10) carrying fan blades (18), the cone being mounted on the end of the shaft and serving to control the angle of incidence of an incoming airflow at the roots of the fan blades (18), the assembly being **characterized in that** the cone is mounted on the above-mentioned shaft (10) by control means (42) for controlling axial displacement, thereby making it possible to modify the axial position of said cone relative to the fan blades (18).

2. An assembly according to claim 1, **characterized in that** the cone is axially displaceable between a forward position (40) for providing protection against the ingestion of solids and particles, and a set-back position (38) for optimizing the angle of incidence of the air at the roots of the blades (18) of the fan.

3. An assembly according to claim 1 or claim 2, **characterized in that** the cone is connected to the above-mentioned shaft (10) by a hydraulic actuator (42) having a cylinder that is secured to the end of the shaft (10) and having a piston rod (46) that carries the cone (24).

4. An assembly according to claim 3, **characterized in that** the hydraulic actuator (42) is connected to rotary hydraulic fluid feed means (56).

5. An assembly according to claim 4, **characterized in that** the means for feeding the actuator (42) comprise a source (58) of hydraulic fluid under pressure and regulator means (60) for regulating the pressure.

6. A turbomachine such as a turbojet, said turbomachine being **characterized in that** it includes an assembly according to any preceding claim.

## Patentansprüche

1. Anordnung eines Eingangskonus einer Turbomaschine, wie insbesondere eines Turbostrahltriebwerks, und einer Gebläseschaufeln (18) tragender Welle (10), wobei der Konus am Ende der Welle gelagert ist und es ermöglicht, den Einfall einer auf die Füße der Gebläseschaufeln (18) einströmenden Luftströmung zu regeln,
**dadurch gekennzeichnet, dass** der Konus auf der oben genannten Welle (10) durch gesteuerte Axialverschiebemittel (42), die es ermöglichen, seine axiale Stellung gegenüber den Gebläseschaufeln (18) zu ändern, gelagert ist.

2. Anordnung nach Anspruch 1,
**dadurch gekennzeichnet, dass** der Konus zwischen einer ausgefahrenen Position (40) zum Schutz vor der Aufnahme von Materien und festen Partikeln, und einer zurückgezogenen Position (38) zur Optimierung des Lufteinfalls auf die Füße der Schaufeln (18) des Gebläses verschiebbar ist.

3. Anordnung nach Anspruch 1 oder 2,
**dadurch gekennzeichnet, dass** der Konus mit der oben genannten Welle (10) durch einen Hydraulikzylinder (42), dessen Zylinder am Ende der Welle (10) befestigt ist und dessen Kolbenstange (46) den Konus (24) trägt, verbunden ist.

4. Anordnung nach Anspruch 3,
**dadurch gekennzeichnet, dass** der Hydraulikzylinder (42) mit Drehmitteln (56) zur Zuführung von hydraulischer Flüssigkeit verbunden ist.

5. Anordnung nach Anspruch 4,
**dadurch gekennzeichnet, dass** die Zuführungsmittel des Zylinders (42) eine Quelle (58) von hydraulischer Druckflüssigkeit und Mittel (60) zur Druckregulierung umfassen.

6. Turbomaschine, wie ein Turbostrahltriebwerk,
**dadurch gekennzeichnet, dass** sie eine Anordnung nach einem der vorhergehenden Ansprüchen umfasst.
